# FASCICULE DE BREVET EUROPEEN

(11) **EP 2 420 421 B1**
(45) Date de publication et mention de la délivrance du brevet: **09.01.2013**
(21) Numéro de dépôt: 11171985.2
(22) Date de dépôt: 29.06.2011
(51) Int. Cl.: B60T 13/74, F16H 1/00

(54) **Servomoteur électrique d'assistance de freinage compact**
Kompakter Elektrischer Bremskraftverstärker
Compact electric brake booster

(30) Priorité: 16.08.2010 FR 1003376
(43) Date de publication de la demande: 22.02.2012
(73) Titulaire: ROBERT BOSCH GMBH, 70442 Stuttgart (DE)
(72) Inventeur: Cagnac, Bastien, 60500 Chantilly (FR); Gaffe, François, 44420 La Turballe (FR); Richard, Philippe, 77500 Chelles (FR)

(56) Documents cités:
- EP-A2- 0 395 262
- DE-A1-102007 018 469

## Description

L'invention concerne un servomoteur électrique d'assistance de freinage d'un véhicule. L'invention a pour but de diminuer l'encombrement généré par un tel servomoteur.

Un servomoteur électrique est formé par un moteur électrique et par une tige de poussée tel que décrit dans DE 10 2007 018469 ou dans EP 0 395 262. La tige de poussée est reliée à une extrémité à une pédale de frein (non représentée) et à une extrémité opposée à un maître cylindre. La tige de poussée s'étend le long d'un axe d'allongement. La tige de poussée est également reliée à un arbre moteur du moteur électrique par des moyens d'entraînement. Par l'intermédiaire de ces moyens d'entraînement, le moteur électrique assiste l'entraînement en déplacement de la tige de poussée. Lorsque le conducteur appui sur la pédale de frein, la tige de poussée est entraînée en déplacement en direction du maître cylindre. Le moteur électrique entraîne un déplacement de la tige de poussée sur une plus longue distance et surtout avec une plus grande force qu'avec celle générée par l'appui seul du conducteur sur la pédale de frein.

Le problème posé par ce type de servomoteur est que, du fait de l'emplacement du moteur par rapport au maître cylindre et par rapport à un réservoir de fluide hydraulique alimentant le maître cylindre, le positionnement du moteur est délicat à réaliser. En effet, il est nécessaire d'écarter le moteur du maître cylindre pour ne pas que le moteur touche le maître cylindre. De plus, la forme du réservoir est dépendante de la présence de ce moteur, ce qui réduit les capacités volumétriques d'un tel réservoir et/ou ce qui rend la conception du réservoir plus délicate et plus coûteuse.

Pour résoudre ce problème, dans l'invention, il est prévu de modifier l'architecture du servomoteur de telle manière que le moteur se situe par rapport à la tige de poussée avec un axe d'allongement de l'arbre moteur s'étendant dans un premier plan coupant perpendiculairement un deuxième plan dans lequel s'étend l'axe d'allongement de la tige de poussée.

Ainsi, le moteur est positionné de telle manière qu'il n'est pas gêné par le maître cylindre et/ou par le réservoir de fluide. Un tel servomoteur est, de plus, compact et permet ainsi de réduire l'encombrement généré par la présence d'un tel servomoteur électrique.

L'invention a donc pour objet un servomoteur électrique d'assistance de freinage d'un véhicule comportant
- un moteur électrique comprenant un arbre moteur, ledit arbre moteur s'étendant le long d'un premier axe central,
- une tige de poussée liée par une extrémité à une pédale de frein et par une extrémité opposée à un maître cylindre, la tige de poussée s'étendant le long d'un deuxième axe central,
- des moyens d'entraînement de la tige de poussée, lesdits moyens d'entraînement coopérant avec l'arbre moteur et avec la tige de poussée pour faire déplacer la tige de poussée en direction du maître cylindre, caractérisé en ce que
- le premier axe central s'étend dans un premier plan et le deuxième axe central s'étend dans un deuxième plan, le moteur étant disposé par rapport à la tige de poussée avec le premier plan et le deuxième plan qui se coupent perpendiculairement l'un par rapport à l'autre.

Le servomoteur électrique selon l'invention présente l'avantage d'être plus compact.

Le servomoteur électrique selon l'invention présente également l'avantage de ne plus nécessiter l'utilisation d'une vis sans fin.

Les étapes pour réaliser un tel servomoteur sont également simplifiées. Le démontage est également facile à réaliser.

L'invention concerne également un procédé de montage d'un tel servomoteur électrique d'assistance de freinage d'un véhicule, caractérisé en ce qu'il comporte les étapes suivantes
- assembler les moyens d'entraînement de la tige de poussée entre eux,
- lier une extrémité de l'arbre moteur aux moyens d'entraînements de la tige de poussée,
- placer l'arbre moteur et les moyens d'entraînements à l'intérieur d'un boîtier,
- insérer la tige de poussée à l'intérieur du boîtier tout liant la tige de poussée aux moyens d'entraînement, et
- poser un mécanisme moteur autour d'une extrémité opposée de l'arbre moteur pour lier en rotation l'arbre moteur au mécanisme moteur.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
Figure 1 : Une représentation schématique en coupe transversale d'un servomoteur électrique, selon l'invention ;
Figure 2 : Une représentation schématique en coupe transversale d'une partie du servomoteur électrique, selon l'invention ;
Figure 3 : Une représentation schématique en coupe transversale d'une partie d'un servomoteur électrique, selon une variante de l'invention ;
Figure 4 : Une représentation schématique en coupe transversale d'une extrémité d'un arbre moteur du servomoteur électrique, selon l'invention ;
Figures 5 à 8 : Des représentations schématiques du procédé de montage d'un servomoteur électrique, selon l'invention.

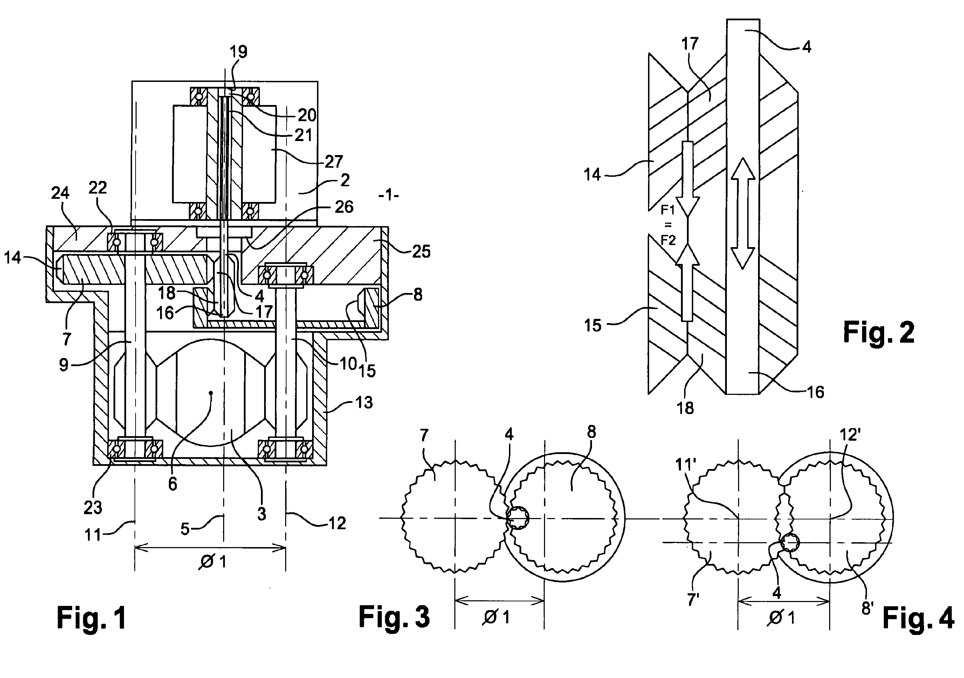

La figure 1 illustre un servomoteur électrique 1, selon l'invention. Le servomoteur 1 comporte un moteur électrique 2 et une tige de poussée 3.

Le moteur électrique 2 comporte un arbre moteur 4 qui s'étend le long d'un axe central moteur 5.

La tige de poussée 3 est reliée par une première extrémité à une pédale de frein (non représentée) et par une deuxième extrémité, opposée à la première extrémité, à un maître cylindre (non représenté). La tige de poussée 3 s'étend le long d'un axe central d'allongement 6, depuis la pédale de frein vers le maître cylindre. La tige de poussée 3 est déplacée en direction du maître cylindre suite à l'appui du conducteur sur la pédale de frein. Le déplacement de la tige de poussée 3 est amplifié tant en force qu'en mouvement par le moteur électrique du servomoteur. Pour ce faire, des moyens d'entraînement 7, 8, 9 et 10 sont prévus de manière à relier mécaniquement le moteur électrique à la tige de poussée 3. Les moyens d'entraînement sont formés par une première roue 7, par une deuxième roue 8, par un premier pignon 9 et par un deuxième pignon 10.

La première roue 7 et la deuxième roue 8 coopèrent par engrènement avec l'arbre moteur 4 pour leur entraînement en rotation. La première roue 7 et la deuxième roue 8 sont liées en rotation respectivement au premier pignon 9 et au deuxième pignon 10.

Le premier pignon 9 et le deuxième pignon 10 coopèrent avec la tige de poussée 3 pour entraîner un déplacement par translation de la tige de poussée 3 depuis la pédale de frein vers le maître cylindre. Pour cela, la tige de poussée 3 forme une crémaillère à un premier endroit de la tige de poussée 3 coopérant avec le premier pignon 9 et une autre crémaillère à un deuxième endroit de la tige de poussée 3 coopérant avec le deuxième pignon 10. A chacun de ces endroits, la tige de poussée 3 forme une série de crans s'étendant le long d'un corps de la tige de poussée 3 et longitudinalement par rapport à l'axe d'allongement 6 de la tige de poussée 3. Les crans sont destinés à s'engrener avec les dents des roues correspondantes. Dans l'exemple de l'invention, le premier endroit et le deuxième endroit de la tige de poussée 3 sont situés symétriquement l'un par rapport à l'autre et par rapport à l'axe d'allongement 6 de la tige de poussée 3. La tige de poussée 3 a alors une forme de ballon de rugby en coupe transversale.

La tige de poussée 3 est entraînée en déplacement, d'une part, par engrènement du premier pignon 9 avec la tige de poussée 3, et d'autre part, par engrènement du deuxième pignon 10 avec la tige de poussée 3.

La première roue 7 est disposée avec un axe central de rotation 11 qui est coaxial à un axe central du premier pignon 9. La deuxième roue 8 est disposée avec un axe central de rotation 12 qui est coaxial à un axe central du deuxième pignon 10. L'axe central du premier pignon 9 et l'axe central du deuxième pignon 10 sont des axes le long desquels s'étendent respectivement le premier pignon 9 et le deuxième pignon 10.

L'axe central du premier pignon 9 et l'axe central du deuxième pignon 10 sont colinéaires à l'axe moteur 5.

L'axe central du premier pignon 9 et l'axe central du deuxième pignon 10 s'étendent chacun dans un plan qui est disposé orthogonalement par rapport à un autre plan dans lequel s'étend l'axe d'allongement 6 de la tige de poussée 3.

Le premier pignon 9 et le deuxième pignon 10 sont montés fixés à un boîtier 13 tout en étant montés libres en rotation. Le boîtier 13 renferme les moyens d'entraînement précédemment décrits ainsi que la tige de poussée 3.

Selon l'invention, l'axe moteur 5 de l'arbre moteur 4 s'étend dans un premier plan qui coupe perpendiculairement un deuxième plan dans lequel s'étend l'axe d'allongement 6 de la tige de poussée 3.

Dans l'exemple de réalisation préférée de l'invention, l'axe moteur 5 est disposé orthogonalement par rapport à l'axe d'allongement 6 de la tige de poussée 3. L'axe moteur 5 ne coupe pas l'axe d'allongement 6 de la tige de poussée 3.

Mais l'axe moteur 5 pourrait être disposé coupant perpendiculairement l'axe d'allongement 6 de la tige de poussée 3.

Ainsi, le servomoteur 1 peut être facilement dégagé du maître cylindre et d'un réservoir de fluide hydraulique (non représenté) alimentant ce même maître cylindre. La longueur des pignons 9 et 10 peut aussi être réduite. La longueur est mesurée le long de l'axe central du pignon considéré. Le servomoteur 1 peut donc être plus compact.

Dans le mode de réalisation préféré de l'invention, il est également prévu que la première roue 7 présente une denture externe 14 et que la deuxième roue 8 présente une denture interne 15. La première roue 7 et la deuxième roue 8 sont alors situées l'une en dessous l'autre le long de l'arbre moteur 4 tout en coopérant par engrènement avec l'arbre moteur 4. La deuxième roue 8 coopère avec l'arbre moteur 4 tout en recouvrant une extrémité 16 de l'arbre moteur 4. L'une des deux roues tourne dans le même sens de rotation que celui de l'arbre moteur tandis que l'autre roue tourne dans un sens opposé à celui de l'arbre moteur. La première roue 7 et la deuxième roue 8 sont contrarotatives.

Figures 2 et 3, du fait d'une telle forme des roues, le rapport de réduction entre la vitesse de rotation de l'arbre moteur 4 et la vitesse de déplacement de la tige de poussée 3 peut augmenter de telle manière que la distance ou entraxe ∅1 entre l'axe central du premier pignon 9 et l'axe central du deuxième pignon 10 reste constante. De plus, le rapport de réduction peut être augmenté sans qu'il y ait d'impact sur les dimensions de la tige de poussée 3. Le rapport de réduction est augmenté en augmentant le diamètre de chacune des roues 7 et 8. Des roues 7' et 8' sont alors disposées par rapport à l'arbre moteur 4 de telle manière qu'une ligne passant par l'axe central 11' de la première roue 7' et passant par l'axe central 12' de la deuxième roue 8' est décalée parallèlement par rapport à une autre ligne passant par l'arbre moteur 4, figure 3.

Ainsi, à chaque fois que l'on veut augmenter le rapport de réduction, l'architecture du servomoteur 1 est peu modifiée. En effet, si le diamètre des roues 7 et 8 est augmenté, seul le volume réservé à l'emplacement de telles roues 7 et 8 est susceptible d'être modifié. Il peut être prévu que le boîtier 13 soit conçu de telle manière que, potentiellement, il peut contenir des roues 7 et 8 de différents diamètres.

L'entraxe ∅1 est une valeur qui dépend des dimensions de la tige de poussée 3.

Pour être sûr de transmettre les mêmes efforts sur les deux crémaillères de la tige de poussée 3 et pour éviter tout mouvement relatif, à tout moment, l'arbre moteur 4 est monté dans un logement 20 du moteur électrique 2 avec un degré de liberté en translation suivant l'axe moteur 5. L'arbre moteur 4 présente également une autre extrémité 21, opposée à l'extrémité 16 du même arbre moteur 4. Cette autre extrémité 21 est placée dans le logement 20 avec un jeu entre un fond 19 de ce logement 20 et l'autre extrémité 21. Plus précisément, l'arbre moteur 4 est monté dans le logement 20 avec un jeu compris entre 1 à 3 millimètres, entre le fond 19 du logement et l'autre extrémité 21 de l'arbre moteur destinée à être placée en appui contre le fond 19. Le jeu laissé entre l'arbre moteur 4 et le fond 19 du logement 20 permet également qu'au moment du montage, le premier pignon 9 et le deuxième pignon 10 s'auto-équilibrent avec l'arbre moteur 4.

Le jeu permet à l'arbre moteur 4 de se positionner par rapport à la première roue 7 et à la deuxième roue 8 tout en répartissant les efforts de manière homogène entre la première roue 7 et le premier pignon 9 d'une part, et entre la deuxième roue 8 et le deuxième pignon 10 d'autre part.

Figure 4, la première roue 7 et la deuxième roue 8 sont alors disposées sur l'arbre moteur 4 de telle manière qu'une première force axiale F1 exercée par la première roue 7 sur l'arbre moteur 4 et qu'une deuxième force axiale F2 exercée par la deuxième roue 8 sur l'arbre moteur 4 s'opposent et s'annulent l'une par rapport à l'autre.

Ainsi, on obtient une répartition homogène des efforts axiaux sur la tige de poussée 3 via le premier pignon 9 et via le deuxième pignon 10.

L'arbre moteur 4 comporte un premier endroit 17 avec lequel la première roue 7 coopère par l'intermédiaire de sa denture externe 14. L'arbre moteur 4 comporte un deuxième endroit 18 avec lequel la deuxième roue 8 coopère par l'intermédiaire de sa denture interne 15.

Le premier endroit 17 et le deuxième endroit 18 forment une série de pas de vis. Dans l'exemple de réalisation préféré de l'invention, les pas de vis du premier endroit 17 sont réalisés dans un sens opposé à celui des pas de vis du deuxième endroit 18. Les pas de vis sont de type hélicoïdaux et sont formés selon une inclinaison assurant leur réversibilité. L'inclinaison est mesurée par rapport à une ligne s'étendant le long de l'arbre moteur et parallèle à l'axe moteur 5. Pour un contact plastique sur acier, l'inclinaison des pas de vis est, par exemple, comprise entre 10° et 45°, de préférence entre 12° et 35°, de manière encore préféré entre 15° et 30°.

Les dentures des roues sont de type droite. Par droite on entend qu'elles s'étendent radialement par rapport à l'axe central de rotation de la roue concernée. Les pas de vis sont réalisés avec une inclinaison telle que la rotation de l'arbre moteur 4 dans un sens opposé à celui utilisé en mode fonctionnement normal est possible. L'inclinaison des pas de vis doit être conçue de telle manière que la rotation de l'arbre moteur soit réversible notamment, mais pas exclusivement, en cas de panne électrique.

Ainsi, la première roue 7 coopère avec l'arbre moteur 4 de telle manière que la première roue 7 exerce une force axiale F1 sur l'arbre moteur 4 de manière à inciter l'arbre moteur 4 à se diriger vers la tige de poussée 3. La deuxième roue 8 coopère avec l'arbre moteur 4 de telle manière que la deuxième roue 8 exerce une force axiale F2 sur l'arbre moteur 4 de manière à inciter l'arbre moteur 4 à se diriger vers le fond 19 du logement 20 du moteur 2.

Les efforts exercés par les roues et par les pignons sont alors répartis uniformément sur les crémaillères de la tige de poussée 3.

Chacun des pignons 9 et 10 comprend un palier supérieur 22 et un palier inférieur 23. Ces paliers 22 et 23 permettent de fixer les pignons 9 et 10 au boîtier 13 tout en autorisant leur rotation autour de leur axe central. Ces paliers 22 et 23 sont destinés chacun à être insérés dans une réservation prévue à cet effet. La présence de ces paliers 22 et 23 et de ces réservations contribue aux inconvénients liés aux dispersions d'usinages et donc à une mauvaise répartition des efforts sur les deux crémaillères. Ainsi, l'insertion de l'arbre moteur 4 avec un jeu comme précédemment mentionné permet ainsi avantageusement de remédier à ce problème.

Le boîtier 13 est fermé par une première plaque de recouvrement 24 et par une deuxième plaque de recouvrement 25. La première plaque 24 et la deuxième plaque 25 sont situées au dessus respectivement du premier pignon 9 et du deuxième pignon 10. Elles sont positionnées de telle manière qu'elles sont encastrées dans le boîtier 13 tout en affleurant une extrémité du boîtier délimitant un orifice du boitier 13 par lequel est inséré l'arbre moteur 4 dans le boîtier 13. Entre la première plaque 24 et la deuxième plaque 25, un bouchon 26 est encastré. Plus précisément, le bouchon 26 est encastré dans la première plaque 24 et dans la deuxième plaque 25 tout en affleurant la première plaque 24 et la deuxième plaque 25. L'arbre moteur 4 traverse le bouchon 26 de telle manière que le bouchon 26 est accolé sur tout son pourtour à l'arbre moteur 4.

Du fait du positionnement de la deuxième roue 8 par rapport à l'arbre moteur 4, le deuxième pignon 10 est de longueur plus petite que celle du premier pignon 9. La différence de niveau entre le premier pignon 9 et le deuxième pignon 10 est compensée par une épaisseur de la deuxième plaque 25 supérieure à la celle de la première plaque 24. L'épaisseur de chacune des plaques est mesurée le long d'une plaque considérée et le long d'un axe parallèle à l'axe moteur 5.

En variante, la première plaque 24 et la deuxième plaque 25 peuvent être réunies en une seule pièce monobloc.

Le palier supérieur 22 est destiné à être logé dans un premier réceptacle formé à partir d'une face interne de la plaque considérée et dans son épaisseur et le palier inférieur 23 est destiné à être logé dans un deuxième réceptacle formé par le boîtier 13.

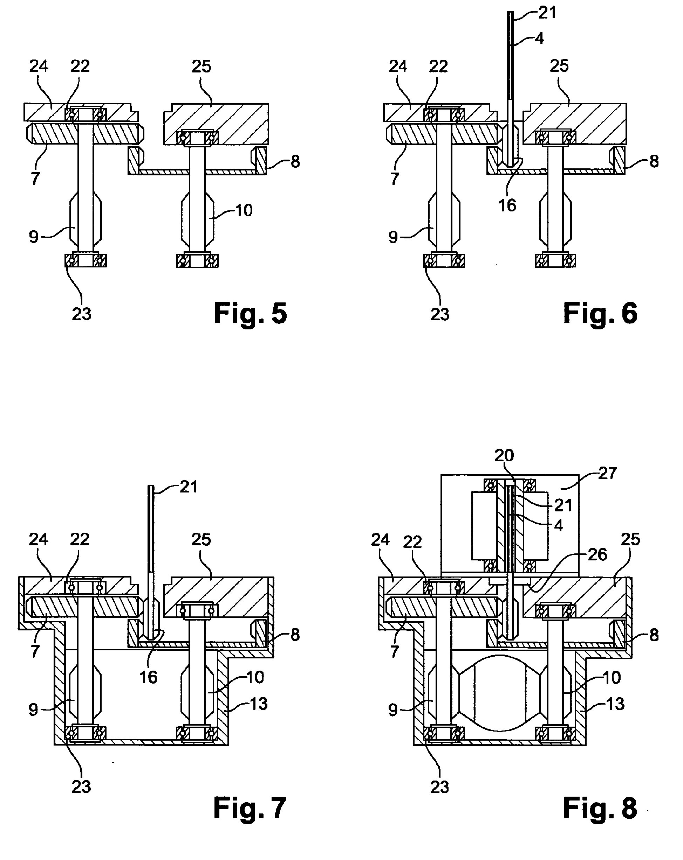

Le montage d'un tel servomoteur électrique 1 selon l'invention est réalisé de la manière suivante, figures 5 à 8.

Figure 5, la première roue 7 est liée en rotation au premier pignon 9. La deuxième roue 8 est liée en rotation au deuxième pignon 10. Le palier supérieur 22 et le palier inférieur 23 de chacun des pignons 9 et 10 sont placés sur leur pignon correspondant. Puis, la première plaque 24 et la deuxième plaque 25 sont placées sur leur pignon respectif équipé de leur palier supérieur 22. Chacun des paliers supérieurs 22 est alors placé dans le premier réceptacle qui lui correspond.

Figure 6, l'arbre moteur 4 est placé entre la première plaque 24 et la deuxième plaque 25 de sorte à engrener avec la première roue 7 et la deuxième roue 8 par son extrémité 16. L'extrémité 16 de l'arbre moteur 4 est placée au contact de la denture externe 14 de la première roue 7 et au contact de la denture interne 15 de la deuxième roue 8.

Figure 7, l'ensemble première roue 7, deuxième roue 8, premier pignon 9, deuxième pignon 10 et arbre moteur 4 est ensuite placé dans le boîtier 13. Chacun des paliers inférieurs 23 s'insère dans le deuxième réceptacle qui lui correspond. La première plaque 24 et la deuxième plaque 25 sont emboîtées dans le boîtier 13 de sorte à ce que chacun des paliers supérieurs 22 s'insère dans le premier réceptacle correspondant.

Figure 8, le bouchon 26 est positionné autour de l'arbre moteur 4 tout en étant accolé à l'arbre moteur 4 sur tout son pourtour jusqu'à ce qu'il vienne s'encastrer dans la première plaque 24 et dans la deuxième plaque 25. Un mécanisme moteur 27 est placé autour de l'arbre moteur 4 tout en venant s'accoler à la première plaque 24, à la deuxième plaque 25 et au bouchon 26. Le mécanisme moteur 27 est un ensemble comprenant le moteur proprement dit du moteur électrique 2. Le mécanisme moteur 27 est relié à l'arbre moteur 4 de manière à faire tourner en rotation l'arbre moteur 4. La tige de poussée 3 est insérée à l'intérieur du boîtier 13 entre le premier pignon 9 et le deuxième pignon 10 tout en étant lié mécaniquement au premier pignon 9 et au deuxième pignon 10. Le déplacement de la tige de poussée 3 par l'intermédiaire de l'arbre moteur 4 peut alors se faire.

Dans un autre exemple de réalisation de l'invention non illustré, la deuxième roue 8 est remplacée par une troisième roue à denture externe. La première roue 7 et cette troisième roue sont alors disposées symétriquement l'une par rapport à l'autre et par rapport à l'arbre moteur 4. Les deux roues tournent alors dans le même sens et dans un sens opposé à celui de l'arbre moteur 4. Les deux roues sont situées symétriquement l'une par rapport à l'autre et par rapport à l'arbre moteur 4. L'endroit de l'arbre moteur avec lequel coopèrent les deux roues est également formé de pas de vis inclinés à 15° tout en s'étendant de manière hélicoïdale.

Dans ce dernier mode de réalisation de l'invention non illustré, les forces axiales exercées par les roues s'auto-équilibrent également. Les deux roues sont situées symétriquement l'une par rapport à l'autre et par rapport à l'arbre moteur 4.

## Revendications

1. Servomoteur électrique (1) d'assistance de freinage d'un véhicule comportant
- un moteur électrique (2) comprenant un arbre moteur (4), ledit arbre moteur s'étendant le long d'un premier axe central (5),
- une tige de poussée (3) liée par une extrémité à une pédale de frein et par une extrémité opposée à un maître cylindre, la tige de poussée s'étendant le long d'un deuxième axe central (6),
- des moyens d'entraînement (7,8,9,10) de la tige de poussée, lesdits moyens d'entraînement coopérant avec l'arbre moteur et avec la tige de poussée pour faire déplacer la tige de poussée en direction du maître cylindre, **caractérisé en ce que**
- le premier axe central s'étend dans un premier plan et le deuxième axe central s'étend dans un deuxième plan, le moteur étant disposé par rapport à la tige de poussée avec le premier plan et le deuxième plan qui se coupent perpendiculairement l'un par rapport à l'autre, **en ce que** le premier axe central et le deuxième axe central sont disposés orthogonalement l'un par rapport à l'autre et **en ce que** les moyens d'entraînement sont formés par une première roue (7) et par une deuxième roue (8), la première roue présentant une denture externe (14) et la deuxième roue présentant une denture interne (15), l'arbre moteur coopérant par engrenage avec la denture externe de la première roue pour entraîner en rotation la première roue et l'arbre moteur coopérant avec la denture interne de la deuxième roue pour entraîner en rotation la deuxième roue.

2. Servomoteur selon la revendication 1, **caractérisé en ce que** la première roue coopère avec un premier endroit (17) de l'arbre moteur et la deuxième roue coopère avec un deuxième endroit (18) de l'arbre moteur, le premier endroit formant des pas de vis dans un sens et le deuxième endroit formant des pas de vis dans un sens opposé à celui du premier endroit.

3. Servomoteur selon la revendication 2, **caractérisé en ce que** chaque pas de vis est incliné entre 12° et 30°.

4. Servomoteur selon l'une des revendications 2 à 3, **caractérisé en ce que** les pas de vis sont de types hélicoïdaux.

5. Servomoteur selon l'une des revendications 1 à 4, **caractérisé en ce que** l'arbre moteur est monté dans un logement (20) du moteur avec un jeu compris entre 1 à 3 millimètres, entre un fond (19) du logement et une extrémité (21) de l'arbre moteur destinée à être placée en appui contre le fond.

6. Procédé de montage d'un servomoteur électrique d'assistance de freinage d'un véhicule selon l'une des revendications 1 à 5, **caractérisé en ce qu'**il comporte les étapes suivantes
- assembler les moyens d'entraînement de la tige de poussée entre eux,
- lier une extrémité (16) de l'arbre moteur aux moyens d'entraînements de la tige de poussée,
- placer l'arbre moteur et les moyens d'entraînements à l'intérieur d'un boîtier (13),
- insérer la tige de poussée à l'intérieur du boîtier tout liant la tige de poussée aux moyens d'entraînement, et
- poser un mécanisme moteur (27) autour d'une extrémité opposée (21) de l'arbre moteur pour lier en rotation l'arbre moteur au mécanisme moteur.

7. Procédé de montage selon la revendication 6, **caractérisé en ce qu'**il comporte les étapes suivantes
- lier en rotation une première roue (7) à un premier pignon (9) et lier en rotation une deuxième roue (8) à un deuxième pignon (10),
- placer une extrémité de l'arbre moteur au contact d'une denture externe (14) de la première roue et au contact d'une denture interne (15) de la deuxième roue,
- relier mécaniquement la tige de poussée au premier pignon et au deuxième pignon en insérant la tige de poussée entre le premier pignon et le deuxième pignon.

## Claims

1. Electric brake booster (1) for a vehicle, comprising
- an electric motor (2) comprising a drive shaft (4), the said drive shaft extending along a first central axis (5),
- a thrust rod (3) connected by one end to a brake pedal and by an opposite end to a master cylinder, the thrust rod extending along a second central axis (6),
- means (7, 8, 9, 10) for driving the thrust rod, the said driving means interacting with the drive shaft and with the thrust rod in order to move the thrust rod in the direction of the master cylinder, **characterized in that**
- the first central axis extends in a first plane and the second central axis extends in a second plane, the motor being placed relative to the thrust rod with the first plane and the second plane that intersect perpendicularly with one another, **in that** the first central axis and the second central axis are placed orthogonally with respect to one another and **in that** the driving means are formed by a first gear wheel (7) and by a second gear wheel (8), the first gear wheel having external teeth (14) and the second gear wheel having internal teeth (15), the drive shaft interacting by meshing with the external teeth of the first gear wheel in order to rotate the first gear wheel and the drive shaft interacting with the internal teeth of the second gear wheel in order to rotate the second gear wheel.

2. Booster according to Claim 1, **characterized in that** the first gear wheel interacts with a first location (17) of the drive shaft and the second gear wheel interacts with a second location (18) of the drive shaft, the first location forming screw threads in one direction and the second location forming screw threads in a direction opposite to that of the first location.

3. Booster according to Claim 2, **characterized in that** each screw thread is inclined at between 12° and 30°.

4. Booster according to one of Claims 2 and 3, **characterized in that** the screw threads are of helical types.

5. Booster according to one of Claims 1 to 4, **characterized in that** the drive shaft is mounted in a housing (20) of the motor with a clearance of between 1 to 3 millimetres, between a bottom (19) of the housing and an end (21) of the drive shaft designed to be placed resting against the bottom.

6. Method for assembling an electric brake booster for a vehicle according to one of Claims 1 to 5, **characterized in that** it comprises the following steps:
- assembling together the means for driving the thrust rod,
- connecting an end (16) of the drive shaft to the means for driving the thrust rod,
- placing the drive shaft and the driving means inside a casing (13),
- inserting the thrust rod into the casing while connecting the thrust rod to the driving means, and
- placing a drive mechanism (27) around an opposite end (21) of the drive shaft in order to connect the drive shaft in rotation to the drive mechanism.

7. Assembly method according to Claim 6, **characterized in that** it comprises the following steps
- connecting in rotation a first gear wheel (7) to a first pinion (9) and connecting in rotation a second gear wheel (8) to a second pinion (10),
- placing an end of the drive shaft in contact with external teeth (14) of the first gear wheel and in contact with internal teeth (15) of the second gear wheel,
- mechanically connecting the thrust rod to the first pinion and to the second pinion by inserting the thrust rod between the first pinion and the second pinion.

## Patentansprüche

1. Elektrischer Bremshilfe-Servomotor (1) eines Fahrzeugs, der Folgendes aufweist:
- einen Elektromotor (2), der eine Antriebswelle (4) enthält, wobei die Antriebswelle sich entlang einer ersten zentralen Achse (5) erstreckt,
- eine Schubstange (3), die über ein Ende mit einem Bremspedal und über ein gegenüberliegendes Ende mit einem Hauptzylinder verbunden ist, wobei die Schubstange sich entlang einer zweiten zentralen Achse (6) erstreckt,
- Antriebseinrichtungen (7, 8, 9, 10) der Schubstange, wobei die Antriebseinrichtungen mit der Antriebswelle und mit der Schubstange zusammenwirken, um die Schubstange in Richtung des Hauptzylinders zu verschieben,
**dadurch gekennzeichnet, dass**
- die erste zentrale Achse sich in einer ersten Ebene und die zweite zentrale Achse sich in einer zweiten Ebene erstreckt, wobei der Motor bezüglich der Schubstange mit der ersten Ebene und der zweiten Ebene angeordnet ist, die sich lotrecht zueinander schneiden, dass die erste zentrale Achse und die zweite zentrale Achse orthogonal zueinander angeordnet sind, und dass die Antriebseinrichtungen von einem ersten Rad (7) und von einem zweiten Rad (8) geformt werden, wobei das erste Rad eine Außenzahnung (14) aufweist und das zweite Rad eine Innenzahnung (15) aufweist, wobei die Antriebswelle durch Ineinandergreifen mit der Außenzahnung des ersten Rads zusammenwirkt, um das erste Rad in Drehung zu versetzen, und die Antriebswelle mit der Innenzahnung des zweiten Rads zusammenwirkt, um das zweite Rad in Drehung zu versetzen.

2. Servomotor nach Anspruch 1, **dadurch gekennzeichnet, dass** das erste Rad mit einer ersten Stelle (17) der Antriebswelle zusammenwirkt, und das zweite Rad mit einer zweiten Stelle (18) der Antriebswelle zusammenwirkt, wobei die erste Stelle Gewindesteigungen in einer Richtung und die zweite Stelle Gewindesteigungen in einer Gegenrichtung zu derjenigen der ersten Stelle formt.

3. Servomotor nach Anspruch 2, **dadurch gekennzeichnet, dass** jede Gewindesteigung zwischen 12° und 30° geneigt ist.

4. Servomotor nach einem der Ansprüche 2 bis 3, **dadurch gekennzeichnet, dass** die Gewindesteigungen von schraubenförmiger Art sind.

5. Servomotor nach einem der Ansprüche 1 bis 4, **dadurch gekennzeichnet, dass** die Antriebswelle in eine Aufnahme (20) des Motors mit einem Spiel zwischen 1 und 3 mm zwischen einem Boden (19) der Aufnahme und einem Ende (21) der Antriebswelle montiert ist, das dazu bestimmt ist, anlehnend gegen den Boden angeordnet zu werden.

6. Verfahren zur Montage eines elektrischen Bremshilfe-Servomotors eines Fahrzeugs nach einem der Ansprüche 1 bis 5, **dadurch gekennzeichnet, dass** es die folgenden Schritte aufweist:
- Zusammenbau der Antriebseinrichtungen der Schubstange miteinander,
- Verbinden eines Endes (16) der Antriebswelle mit den Antriebseinrichtungen der Schubstange,
- Anordnen der Antriebswelle und der Antriebseinrichtungen im Inneren eines Gehäuses (13),
- Einführen der Schubstange ins Innere des Gehäuses, während die Schubstange mit den Antriebseinrichtungen verbunden wird, und
- Einsetzen eines Antriebsmechanismus (27) um ein entgegengesetztes Ende (21) der Antriebswelle, um die Antriebswelle mit dem Antriebsmechanismus in Drehung zu verbinden.

7. Montageverfahren nach Anspruch 6, **dadurch gekennzeichnet, dass** es die folgenden Schritte aufweist:
- Drehverbindung eines ersten Rads (7) mit einem ersten Getrieberad (9) und Drehverbindung eines zweiten Rads (8) mit einem zweiten Getrieberad (10),
- Anordnung eines Endes der Antriebswelle in Kontakt mit einer Außenzahnung (14) des ersten Rads und in Kontakt mit einer Innenzahnung (15) des zweiten Rads,
- mechanische Verbindung der Schubstange mit dem ersten Getrieberad und mit dem zweiten Getrieberad, indem die Schubstange zwischen das erste Getrieberad und das zweite Getrieberad eingeführt wird.
